Europäisches Patentamt

European Patent Office

Office européen des brevets

(11) Veröffentlichungsnummer: **0 543 229 B1**

## EUROPÄISCHE PATENTSCHRIFT

(45) Veröffentlichungstag der Patentschrift: **20.12.95**

(51) Int. Cl.⁶: **C09J 5/00**

(21) Anmeldenummer: **92118957.7**

(22) Anmeldetag: **05.11.92**

(54) **Klebverfahren mit hoher Anfangsfestigkeit**

(30) Priorität: **18.11.91 DE 4137902**

(43) Veröffentlichungstag der Anmeldung:
**26.05.93 Patentblatt 93/21**

(45) Bekanntmachung des Hinweises auf die
Patenterteilung:
**20.12.95 Patentblatt 95/51**

(84) Benannte Vertragsstaaten:
**DE FR GB IT**

(56) Entgegenhaltungen:
**DE-A- 3 942 616**
**FR-A- 2 534 846**

(73) Patentinhaber: **BAYER AG**

**D-51368 Leverkusen (DE)**

(72) Erfinder: **Stepanski, Horst, Dr.**
**Rolandstrasse 22**
**W-5090 Leverkusen 3 (DE)**
Erfinder: **Colinas-Martinez, José**
**Am Stumpf 19**
**W-5632 Wermelskirchen 2 (DE)**
Erfinder: **Meckel, Walter, Dr.**
**Zonser Strasse 9**
**W-4040 Neuss (DE)**

**Beschreibung**

Die Erfindung betrifft ein Verfahren zum Verbinden von Oberflächen mittels feuchtigkeitsreaktiver Klebstoffe, insbesondere PUR-Schmelzklebstoffe.

Feuchtigkeitsreaktive Klebstoffe werden in der Praxis eingesetzt, wenn es gilt, Klebstoffe lösemittelfrei einkomponentig zu applizieren und ohne äußere Energiezufuhr abbinden zu lassen. Eine besondere Bedeutung haben hier durch Prepolymerisation hergestellte Polyisocanato-Polyurethane erlangt.

Verarbeitungstechnisch besonders vorteilhaft sind in vielen Fällen bei Raumtemperatur amorph oder teilkristallin erstarrt vorliegende Polyisocyanato-Polyurethane, die in der klebtechnischen Literatur häufig als "Feuchtigkeitsreaktive PUR-Schmelzklebstoffe" bzw. "Feuchtigkeitsreaktive Hotmelts" bezeichnet werden. Sie lassen sich bei Temperaturen von häufig unter 100 °C, fast immer unter 150 °C, als Schmelze auf die Fügeteile applizieren. Beim Erstarren der Schmelze wird rasch eine erste Montagefestigkeit erreicht. Durch die anschließend ablaufende Reaktion mittels aus den Substraten oder aus der Umgebungsluft stammender Feuchtigkeit kommt es zu einem Festigkeitszuwachs, insbesondere bei erhöhter Einsatztemperatur. Diese Reaktion nimmt mehrere Stunden, meist mehrere Tage in Anspruch.

Beim Beschichten von flächigen, insbesondere vorgeformten Teilen werden feuchtigkeitsreaktive PUR-Schmelzklebstoffe häufig mit Hilfe von Luft verspritzt. Vorteilhaft kann dabei sein, die vorgewärmte Luft in der Spritzdüse so zu führen, daß ein kontinuierlicher Faden ausgesponnen und schlaufenförmig in Rotation versetzt wird. Man erhält so ein sehr konturgenaues Spritzbild ohne "Overspray".

Das Verspritzen eines Schmelzklebstoffes kann um so problemloser vorgenommen werden, je niedriger die Schmelzviskosität bzw. je niedriger das Molekulargewicht ist. Kurzkettige Polymere ergeben jedoch vor Eintritt einer hinreichenden Feuchtigkeits-Vernetzung für viele Anwendungsfälle zu geringe Anfangs-Festigkeitswerte. Die im praktischen Einsatz befindlichen Schmelzklebstoffe stellen in der Regel eine Kompromißlösung im Hinblick auf diese prinzipiell gegensätzlichen Anforderungen dar.

In der DE-PS 26 09 266 wird ein Ausweg aus dieser Problematik aufgezeigt. Der PUR-Schmelzklebstoff wird nach dem Auftragen auf die zu verklebenden Substrate einer Behandlung durch feuchte Luft bzw. durch Wasserdampf unterzogen. Hierdurch wird eine Vorvernetzung des Klebstoffes bewirkt, die nach einer thermischen Aktivierung beim Verkleben die gewünschte höhere Anfangsfestigkeit ergibt.

Nachteilig ist bei diesem Verfahren jedoch, daß die Befeuchtung der Oberfläche einen zusätzlichen Verfahrensschritt bedeutet. Für eine in der Massenproduktion übliche Fließfertigung ist zudem die typische Behandlungszeit von 10-15 Minuten störend. Manche Werkstoffe (z.B. Holzfaserplatten) können darüber hinaus durch eine so lange Befeuchtung geschädigt werden.

Eine andere Möglichkeit des schnelleren Aufbaus einer Festigkeit wird in der DE-OS 3 412 884 aufgezeigt, bei der das Substrat mit Katalysatoren behandelt wird, um auf diese Weise eine schnellere Reaktion mit Feuchtigkeit zu ermöglichen. Aber auch dieses Verfahren stellt wegen des zusätzlichen Arbeitsschrittes keine befriedigende Lösung dar, zumal die Katalysatoren nur langsam wirken, da sie nur durch Diffusion in den aufgebrachten Klebstoff wirksam werden können.

Eine weitere Möglichkeit wird in der DE-OS 3 840 220 vorgeschlagen, um die oben genannten Nachteile zu umgehen, indem dem reaktiven Hotmelt unmittelbar vor der Applikation wasserabgebende Substanzen, wie beispielsweise Kristallwasser enthaltende anorganische oder organische Salze, oder mit Wasser gesättigte Zeolithe zugegeben werden. Auch dieses Verfahren hat Nachteile, insofern die Wasser enthaltenden Substanzen in einer zweiten Komponente dispergiert werden müssen und der Schmelze des Hotmelts über einen, beispielsweise statischen Mischer vor der Applikation zugemischt werden müssen. Dies kann bei in der Praxis immer auftretenden Unterbrechungen oder bei der generell diskontinuierlichen Applikation der Hotmelts zum Zuwachsen des Mischers führen.

Überraschenderweise hat sich gezeigt, daß eine bedeutsame Vorvernetzung auch dadurch erreicht werden kann, indem man lediglich beim Verspritzen von feuchtigkeitsreaktiven PUR-Schmelzklebstoffen befeuchtete Luft verwendet. Dabei wird die zum Verspritzen verwendete Preßluft vor Eintritt in den üblichen Lufterhitzer in einem hierfür geeigneten Durchlaufbefeuchter definiert mit Wasser beladen. Im Spritzkegel kommt es wegen der hier vorhandenen günstigen Bedingungen zu einer äußerst intensiven Wassereinwirkung auf den Klebstoff. Dabei ist sekundär, ob beim Spritzen ein Sprühnebel oder ein Spinnfaden entsteht. Bereits unmittelbar nach dem feuchten Verspritzen im Thermoaktivierverfahren verliebte Teile Zeigen eine deutlich verbesserte Anfangsfestigkeit (s. Beispiele).

Gegenstand der Erfindung ist daher ein Verfahren zum Verkleben von Oberflächen, das dadurch gekennzeichnet ist, daß man auf mindestens einer der zu verklebenden Oberflächen ein Prepolymer mit endständigen Isocyanatgruppen durch Verspritzen mittels befeuchteter und erwärmter Druckluft aufträgt, wobei der Wasserdampfgehalt der Druckluft 20 g/kg bis 300 g/kg, jeweils bezogen auf den Anteil trockener Luft, beträgt und wobei die Temperatur der Spritzluft nach der Befeuchtung bis zur Entspannung in der Düse oberhalb der jeweiligen Taupunkttemperatur gehalten wird.

In einer vorteilhaften Ausführungsform kann der applizierte Klebstoff zum Verkleben durch Wärmezufuhr aktiviert werden.

Ausgangskomponenten für das erfindungsgemäße Verfahren sind Polyisocyanato-Polyurethane; d.h. alle Umsetzungsprodukte von Polyolen mit einem Überschuß von Polyisocyanaten, wobei das Verhältnis von Isocyanat zu Hydroxylgruppen in weiten Grenzen variiert werden kann, wie 4 zu 1 bis 1,2 zu 1, vorzugsweise 3 zu 1 bis 1,3 zu 1, und ganz besonders bevorzugt 2,5 zu 1 bis 1,5 zu 1.

Als Polyole sollten vorzugsweise nur bifunktionelle Polyester- und/oder Polyetherpolyole eingesetzt werden. Verzweigte Polyole sollten aus Viskositätsgründen nur in untergeordnetem Maße verwendet werden.

Innerhalb der Klasse der Polyole sind insbesondere zu nennen:

Polyethylen- und/oder Polypropylenetherglykole mit einem Molekulargewicht von 500 bis 5000, vorzugsweise 800 bis 3000. Polytetramethylenetherglykole mit einem Molekulargewicht von 600 bis 3000.

Polyesterglykole, wie sie durch Schmelzkondensation aus Dicarbonsäure, wie beispielsweise Adipinsäure, Sebazinsäure, Dodecandisäure und/oder Terephthalsäure mit Glykolen, wie Ethylenglykol, Butandiol und/oder Hexandiol, erhalten werden. Die Molekulargewichte sollen im Bereich 700 bis 8000, vorzugsweise 1500 bis 6000 liegen.

Eine weitere Hydroxylpolyesterklasse sind die Polycaprolactone und Polycarbonate.

Selbstverständlich können auch Mischungen der Polyole verwendet werden.

Als Polyisocyanate kommen vorzugsweise Diisocyanate, wie 2,4- und/oder 2,6-Toluylendiisocyanat, 2,4'- und/oder 4,4'-Diphenylmethandiisocyanat oder Isophorondiisocyanat in Frage. Es können selbstverständlich auch Mischungen der Diisocyanate verwendet werden. Den Diisocyanaten können in geringen Mengen polyfunktionelle Isocyanate, vorzugsweise aliphatische Polyisocyanate beigemischt werden.

Beispiele von einsetzbaren Hotmelts sind neben den bereits erwähnten, in den folgenden Dokumenten DE-OS 2 401 320, DE-OS 3 236 313, EP-A 35 4527, DE-OS 4 016 717, DE-OS 4 035 280, DE-OS 4 019 668 oder DE-OS 3 931 845, aufgeführt.

Die Herstellung der Hotmelts erfolgt durch Umsetzung der Polyole mit einem Überschuß der Polyisocyanate bei Temperaturen von 50 bis 110°C in einfachen Rührkesseln oder kontinuierlich, z.B. über Stachelmischer.

Für besondere Effekte kann ein Teil der Isocyanatgruppen der Polyisocyanato-Polyurethane mit Aminosilanen, wie beispielsweise γ-Aminopropyltrimethoxysilan umgesetzt werden. Man erhält auf diese Weise Isocyanatgruppen enthaltende Polyurethane mit einem Gehalt von Trialkoxysilanen, die ebenfalls ähnlich den Isocyanatgruppen mit Wasser unter Molekulargewichtserhöhung reagieren und daneben noch haftungsfördernd auf beispielsweise Glasoberflächen einwirken.

Selbstverständlich sind die üblichen Zuschläge, wie Harze, Farbstoffe und/oder Katalysatoren, erlaubt. Als Katalysatoren sind insbesondere solche von Vorteil, die die Isocyanat-Wasser-Reaktion beschleunigen, wie beispielsweise tert. Amine oder Addukte von organischen Zinnverbindungen, wie beispielsweise Dibutylzinndilaurat mit Tosylisocyanat.

Das erfindungsgemäße Verfahren soll anhand der folgenden Beispiele näher erläutert werden.

**Ausgangsmaterialien:**

**Polyole**

POL 1

Polypropylenetherglycol gestartet auf 2,2-Bis-(4-Hydroxy-phenyl)propan OH-Zahl: 204

POL 2

Hydroxylpolyester aus Dodecandisäure und 1,6-Hexandiol
OH-Zahl 25,5     S-Z: 0,9

POL 3

Epoxidharz auf Basis 2,2-Bis-(4-hydroxy-phenylpropan (Rytapox 0191 der Fa. Baklite GmbH).
OH-Zahl: 180     Epoxid-gehalt: 0,21 Äquiv/100 g.

**Isocyanate**

**ISO 1**

4,4'-Diphenylmethandiisocyanat mit 2,1 % 2,4-'-Diphenylmethan-diisocyanat

**ISO 2**

Toluylendiisocyanat mit 65 % des 2,4- und 35 % des 2,6-Isomeren

**ISO 3**

Phenylisocyanat

**ISO 4**

Trimerisiertes Hexamethylendiisocyanat (Desmodur N 3300)
NCO-Gehalt: 21,6 %.

Additive

Add 1

Umsetzungsprodukt von
1 Mol POL 2 mit 1,95 Mol Iso 3

Add 2

Umsetzungsprodukt von
1 Mol POL 1 mit 0,6 Mol Iso 2 und 0,75 Mol Iso 3

Add 3

300 g POL 3 werden mit 108,5 g Iso 3 bei 100°C über 8 Stunden umgesetzt.

Herstellung der Klebstoffsysteme

Die Polyole und Additive werden bei 100°C bei $1,99.10^{-3}$ MPa (15 mm Hg) über 1 Stunde entwässert.
Die Mischung wird auf 80°C abgekühlt und das Polyisocyanat zugegeben und bis zum Erreichen eines konstanten NCO-Wertes bei 80-100°C gerührt. Vor dem Abkühlen in Aluminiumkartuschen wird kurz im Vakuum entgast.

| Beispiele: | POL (g) | Add (g) | ISO (g) | NCO (%) | $\eta$ (120°C) (Pas) |
|---|---|---|---|---|---|
| 1 | 1 000 POL 2 | 163 Add-1 | 90 ISO-1 | 0,81 | 11,2 - |
| 2 | 1 100 POL 2 | 220 Add-3 | 124 ISO-1 29,5 ISO-4 | 1,32 | 28,0 |
| 3 | 4 000 POL 2 | 800 Add-2 | 450 ISO-1 100 ISO-4 | 1,61 | 15,0 |

Nach zweiwöchiger Lagerung bei Raumtemperatur werden die in Kartuschen abgefüllten Prepolymere für 60 Minuten bei 130-140°C im Wärmeschrank aufgeschmolzen.
Die Hotmelts werden aus einer Kartusche mittels einer auf 130°C temperierten Spritzpistole (Beyer + Otto, Kleinostheim) auf 25 mm breite und 4 mm dicke Holzfaserplatten in Form eines Spinnvlieses aufgetragen. Dabei wird die zum Verspinnen verwendete Preßluft vor Eintritt in den üblichen Lufterhitzer durch einen Durchlaufbefeuchter geleitet und beim Durchperlen der temperierten Wasservorlage dieses Befeuchters durch Sättigung definiert mit Wasser beladen.

Der Feuchtigkeitsgrad x der Spritzluft, definiert als Wasserdampfmenge in kg je kg trockene Luft, errechnet sich aus der Beziehung

$$x = \frac{R_L}{R_D} \cdot \frac{p_D}{p - p_D} = 0,622 \frac{\gamma\, p'}{p - \gamma p'}$$

Dabei bedeuten $R_L$ und $R_D$ die Gaskonstanten der Luft und des Wasserdampfes, p den Gesamtdruck, $p_D$ den Wasserdampfteildruck, p' den Sättigungsdruck und $\gamma$ die relative Feuchtigkeit.

In dem im Befeuchter herrschenden Zustand der Sättigung wird

$$\gamma = 1$$

Die Berechnung des Wassergehaltes der Luft vereinfacht sich damit zu

$$x = 0,622 \frac{p'}{p - p'}$$

Der Sättigungsdruck p' des Wasserdampfes hängt nur von der Temperatur im Befeuchter ab und kann aus einer Wasserdampftafel abgelesen werden, Der Gesamtdruck p im Befeuchterraum wird von einem Manometer angezeigt.

In den erfindungsgemäßen Beispielen enthält 1 kg Spritzluft somit bei einer Befeuchtertemperatur von 60°C und einem absoluten Gesamtdruck von 0,3 MPa (3 bar) 44,2 g Wasser. Nach Entspannung auf Atmosphärendruck liegt die Taupunkttemperatur bei 37,5°C.

Im Spritzkegel kommt es wegen der vorhandenen günstigen Bedingungen zu einer äußerst intensiven Wassereinwirkung. Durch die Reaktion zwischen dem aus der feuchten Spritzluft stammenden Wasser und den NCO-Gruppen des Prepolymerisates kommt es zur gewünschten Kettenvorverlängerung.

Unmittelbar nach dem Klebstoffauftrag wird durch Umschalten von feuchte auf trockene Druckluft der Spritzkopf trocken gehalten. Hierdurch wird eine durch Feuchtigkeit bedingte Kettenvorverlängerung des noch in der Spritzdüse vorhandenen Prepolymerisates vermieden.

Damit wird ein über mehrere Stunden dauernder problemloser Klebstoffauftrag gewährleistet.

Klebungen

Die nach dem erfindungsgemäßen Verfahren mit Hotmelt beaufschlagten 25 mm breiten Prüfkörpern aus Holzfaserplatten werden in einer Vakuumtiefziehanlage positioniert. Eine 1,8 mm dicke PVC-Folie wird in einem Rahmen gespannt und 4 Minuten in einem auf 130°C temperierten Umlufttrockenschrank temperiert. Die im Rahmen eingespannte Folie wird anschließend sofort auf den kalten Holzfaserprüfkörper (RT) aufgelegt und mittels Vakuum 12 Sekunden bei ca. $6,66.10^{-4}$ MPa (5 mm Hg) auf den Prüfkörper tiefgezogen. Nach 1 Minute wird ein 180°-Schälversuch (Vorschubgeschwindigkeit 100 mm/min; in Anlehnung an ASTM D 903-49) durchgeführt.

Die Ergebnisse dieser Klebungen sind in der folgenden Tabelle angegeben:

**Klebverhalten der NCO-Prepolmere**

| Produkt | Spritzverhalten | Anfangsfestigkeit nach 1 Minute in N/cm | | Festigkeit nach 24 h Lagerung in N/cm | |
|---|---|---|---|---|---|
| | | trockene Luft | erfindungsgemäß | trockene Luft | erfindungsgemäß |
| 1 | sauberes Spinn-vlies | 0,9 | 2,9 | 25,6 | 40,5 |
| 2 | sauberes Spinn-vlies | 4,6 | 8,7 | 24,6 | 35,1 |
| 3 | sauberes Spinn-vlies | 4,0 | 5,0 | 30,7 | 38,1 |

6

**Patentansprüche**

1.  Verfahren zum Verlieben von Oberflächen, dadurch gekennzeichnet, daß man auf mindestens einer der zu verliebenden Oberflächen ein Prepolymer mit endständigen Isocyanatgruppen durch Verspritzen mittels befeuchteter und erwärmter Druckluft aufträgt, wobei der Wasserdampfgehalt der Druckluft 20 g/kg bis 300 g/kg, jeweils bezogen auf den Anteil trockener Luft, beträgt und wobei die Temperatur der Spritzluft nach der Befeuchtung bis zur Entspannung in der Düse oberhalb der jeweiligen Taupunkttemperatur gehalten wird.

2.  Verfahren nach Anspruch 1, dadurch gekennzeichnet, daß das Prepolymer ein erschmolzener, bei Raumtemperatur erstarrt vorliegender Schmelzklebstoff mit endständigen Isocyanatgruppen ist.

3.  Verfahren nach Anspruch 1 oder 2, dadurch gekennzeichnet, daß das Prepolymer amorph erstarrt.

4.  Verfahren nach Anspruch 1 oder 2, dadurch gekennzeichnet, daß das Prepolymer teilkristallin erstarrt.

5.  Verfahren nach einem der Ansprüche 1 bis 4, dadurch gekennzeichnet, daß der applizierte Klebstoff zum Verlieben durch Wärmezufuhr aktiviert wird.

**Claims**

1.  A process for bonding surfaces, characterized in that an isocyanate-terminated prepolymer is applied to at least one of the surfaces to be bonded by spraying with moistened and heated compressed air, the water vapor content of the compressed air being 20 g/kg to 300 g/kg, based on the percentage of dry air, and the temperature of the spraying air being kept above the particular dew point temperature after moistening up to expansion in the nozzle.

2.  A process as claimed in claim 1, characterized in that the prepolymer is a melted isocyanate-terminated hotmelt present in solidified form at room temperature.

3.  A process as claimed in claim 1 or 2, characterized in that the prepolymer solidifies in amorphous form.

4.  A process as claimed in claim 1 or 2, characterized in that the prepolymer solidifies in partly crystalline form.

5.  A process as claimed in any of claims 1 to 4, characterized in that, after application, the adhesive is heat-activated for bonding.

**Revendications**

1.  Procédé pour coller des surfaces, caractérisé en ce que, sur au moins une des surfaces à coller, on applique un prépolymère à groupes isocyanates terminaux par pulvérisation à l'aide d'air comprimé humidifié et chauffé, à une teneur en vapeur d'eau de 20 g/kg à 300 g/kg, par rapport à l'air sec, la température de l'air de pulvérisation étant maintenue au-dessus du point de rosée particulier après l'humidification et jusqu'à détente dans le gicleur.

2.  Procédé selon la revendication 1, caractérisé en ce que le prépolymère est une colle fusible à groupes isocyanates terminaux, fondue mais qui se solidifie à température ambiante.

3.  Procédé selon la revendication 1 ou 2, caractérisé en ce que le prépolymère se solidifie à l'état amorphe.

4.  Procédé selon la revendication 1 ou 2, caractérisé en ce que le prépolymère se solidifie à l'état partiellement cristallin.

5.  Procédé selon l'une des revendications 1 à 4, caractérisé en ce que la colle appliquée pour le collage est activée par apport de chaleur.